# DEMANDE DE BREVET EUROPEEN

(11) **EP 2 452 844 A1**
(43) Date de publication de la demande: **16.05.2012**
(21) Numéro de dépôt: 11188052.2
(22) Date de dépôt: 07.11.2011
(51) Int. Cl.: B60J 7/22

(54) **Dispositif anti-remous accessoire pour véhicule automobile de type cabriolet**

(30) Priorité: 10.11.2010 FR 1059266
(71) Demandeur: Peugeot Citroën Automobiles SA, 78140 Vélizy Villacoublay (FR)
(72) Inventeur: Rebel, Vincent, 75010 PARIS (FR)

(57) **Abrégé**

Dispositif anti-remous accessoire pour véhicule automobile décapotable avec au moins un filet vertical 1 extensible d'un premier enrouleur 2 disposé à l'arrière des sièges avant 3, ce dispositif comprend deux sous-ensembles a, b, chacun composé d'un corps 4 comportant des moyens de fixation 15 de ce corps 4 sur des tiges 5 de l'appuie-tête 6, un deuxième enrouleur 7 à axe horizontal pour un filet 8 extensible horizontalement et un bras articulé 9 pouvant pivoter entre une position horizontale et une position verticale portant soit un enrouleur 2 d'un filet vertical 1 soit un moyen d'accrochage 10 de l'extrémité frontale du filet vertical 1.

## Description

La présente invention concerne un dispositif anti-remous accessoire pour véhicule automobile décapotable avec au moins un filet extensible d'un premier enrouleur agencé à l'arrière des sièges avant du véhicule.

Lorsqu'un cabriolet est décapoté, la circulation d'air s'écoulant au plus près du pare-brise pénètre partiellement dans l'habitacle et provoque une gêne des occupants par un effet de recirculation et par les turbulences produites.

Pour limiter ces effets, il est connu de placer à l'arrière de l'habitacle un dispositif anti-remous constitué d'un filet à mailles monté sur des cadres rigides métalliques fixés sur la structure du cabriolet. Des encoches sont prévues sur les garnissages de la structure pour la fixation du dispositif. Ces dispositifs sont spécifiques à chaque modèle de cabriolet. En particulier, les formes de cadres métalliques sont spécifiques à chaque modèle car la situation de l'installation change d'un modèle à l'autre.

Ces dispositifs sont difficiles à mettre en place car de grande taille. Ils sont encombrants même repliés en quatre pour les ranger dans le coffre. Ils prennent de la place alors que le coffre est déjà encombré par le toit ou la capote repliée. Ces dispositifs sont à enlever et plier et ranger dès qu'un passager veut s'asseoir sur un des sièges arrière du véhicule.

C'est le but de la présente invention de proposer un dispositif anti-remous accessoire pour véhicule décapotable, qui puisse être monté sur tout modèle de véhicule décapotable quelle que soit sa forme spécifique, qui soit facile à mettre en place et qui n'encombre pas le coffre quand il n'est pas utilisé.

La présente invention a pour objet un dispositif anti-remous accessoire pour véhicule automobile décapotable avec au moins un filet vertical extensible d'un premier enrouleur disposé à l'arrière des sièges avant, ce dispositif comprend deux sous-ensembles, chacun composé d'un corps comportant des moyens de fixation du corps sur des tiges de l'appuie-tête, un deuxième enrouleur à axe horizontal pour un filet extensible horizontalement et un bras articulé, pouvant pivoter entre une position horizontale et une position verticale, portant soit un enrouleur d'un filet vertical soit un moyen d'accrochage de l'extrémité frontale du filet vertical.

De préférence, le corps du dispositif anti-remous présente une longueur qui correspond essentiellement à la largeur du dossier du siège avant.

Avantageusement, le deuxième enrouleur à axe horizontal et le filet extensible horizontalement présentent une largeur qui correspond essentiellement à la largeur du corps du dispositif anti-remous.

Selon un mode de réalisation préféré, l'extrémité frontale du filet horizontal est renforcée par une tige comprenant en son milieu un moyen d'accrochage pour fixer le filet sur une paroi intérieure située à l'arrière de l'espace défini derrière les sièges avant du véhicule.

Le moyen d'accrochage peut être un crochet, un aimant, un accrochage positif, un velcro ®, etc...

De préférence, l'axe de pivot du bras est orienté parallèlement à l'axe longitudinal du véhicule et le bras peut être enclenché dans sa position verticale.

Avantageusement, le filet vertical présente une longueur enroulée supplémentaire suffisante pour absorber les différences de longueur requises pour des positions de sièges différentes.

De préférence, l'extrémité frontale du filet vertical est renforcée par une tige qui porte en son milieu un moyen d'accrochage pour sa fixation sur le moyen d'accrochage correspondant situé sur le bras correspondant.

Selon un mode de réalisation préféré, les moyens de fixation du corps du dispositif sur le dossier du siège avant sont constitués par une platine en porte à faux en partie centrale du corps dans laquelle deux trous sont percés ayant un diamètre et une distance entre eux correspondant à la distance qui sépare les deux tiges d'appuie-tête du siège avant.

Selon une variante, les moyens de fixation du corps du dispositif sur le dossier du siège avant sont constitués par des clips élastiques s'accrochant sur les tiges des appuie-têtes.

Selon une autre variante, le corps du dispositif comprend un dispositif à ressort pour assurer sa fixation positive sur l'intérieur des tiges des appuie-têtes.

L'invention sera bien comprise à la lecture de la description des modes de réalisation préférés, faite à titre d'exemple non limitatif en regard des dessins qui représentent:
- Fig. 1: une vue en perspective d'un mode de réalisation d'un dispositif anti-remous accessoire, monté dans un cabriolet; et
- Fig. 2 à 4: trois variantes des moyens de fixation du dispositif sur le dossier d'un siège avant d'un véhicule décapotable.

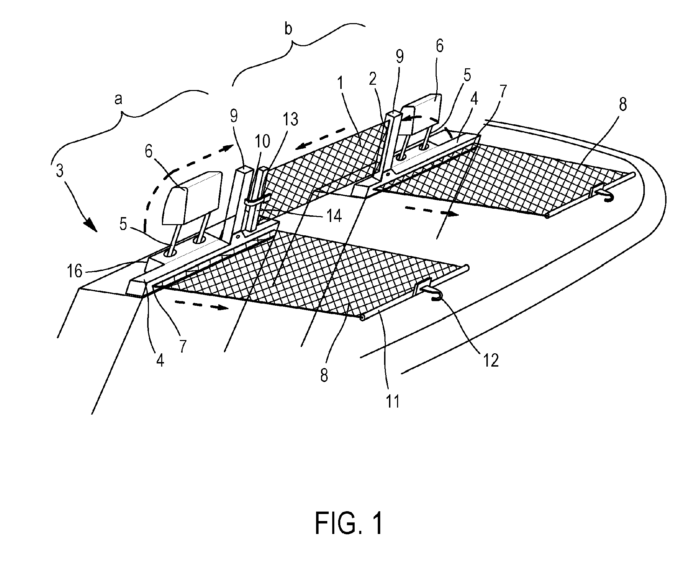

Fig. 1 est une vue en biais de l'espace situé derrière les sièges avant 3 d'un véhicule décapotable. Un mode de réalisation d'un dispositif anti-remous accessoire selon l'invention est monté. Ce dispositif comprend deux sous-ensembles a, b chacun monté sur un dossier d'un siège avant 3. Le sous-ensemble à est monté sur le dossier du siège avant conducteur. Il comprend un corps 4 dans lequel est intégré un enrouleur à axe horizontal 7, sur lequel est enroulé un filet horizontal 8, qui est représenté sorti de l'enrouleur 7. Sur son extrémité frontale, le filet 8 est renforcé par une tige 11, qui comporte en son milieu un moyen d'accrochage 12 qui coopère avec un élément de fixation correspondant sur une paroi intérieure de l'espace défini derrière les sièges avant.

Le corps du dispositif 4 comporte en outre sur sa surface supérieure un bras 9 qui est articulé par son extrémité inférieure sur un axe qui s'étend parallèlement à l'axe longitudinal du véhicule. Le bras 9 peut être pivoté d'une position horizontale de rangement dans une position essentiellement verticale d'utilisation. Ce bras 9 comprend approximativement à mi-hauteur un moyen d'accrochage 10 qui coopère avec un moyen de fixation correspondant 13 disposé sur une tige de renforcement 14 d'un filet vertical 1.

Le filet vertical 1 est extrait d'un enrouleur 2, agencé sur un deuxième bras 9 correspondant qui est articulé sur le corps 4 du deuxième sous-ensemble du dispositif anti-remous, monté sur le dossier du siège avant droit du véhicule décapotable. Les deux sous-ensembles sont à peu près symétriques, à l'exception du fait que sur un bras 9, l'enrouleur 2 est monté et sur l'autre bras est monté le moyen d'accrochage du filet 1. De même le sous-ensemble b comporte un enrouleur 7 à axe horizontal identique à celui du sous-ensemble a.

Les deux bras 9 des deux sous-ensembles a, b peuvent être enclenchés dans leur position verticale. La force de rappel de l'enrouleur 2 maintient le filet 1 sous tension quand il est accroché au bras correspondant. Ainsi, l'ensemble filet extensible et enrouleur peut bien fonctionner indépendamment des diverses positions que les deux sièges avant 3 peuvent avoir.

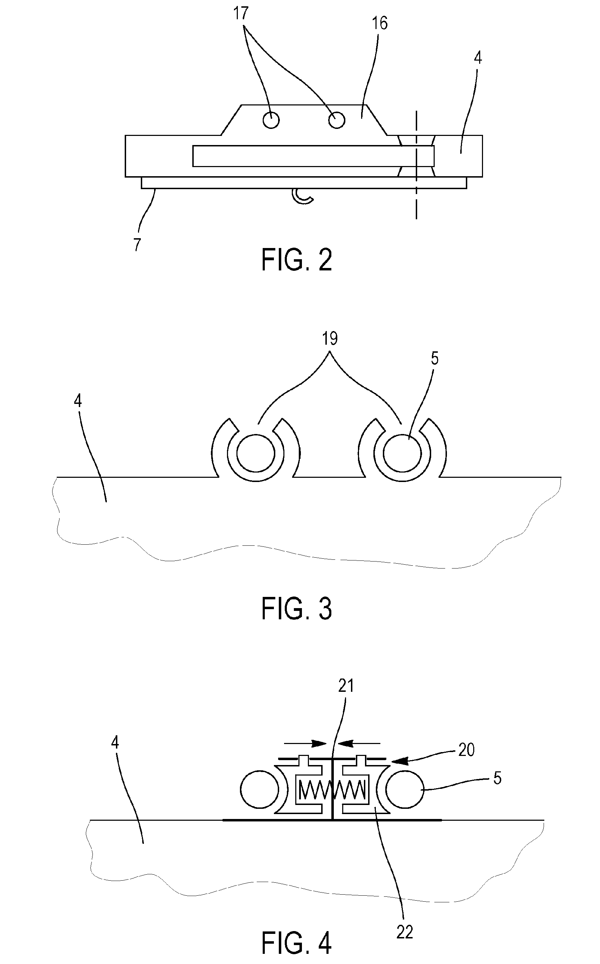

Figs. 2 à 4 montrent trois variantes des moyens de fixation du dispositif anti-remous accessoire sur le dossier des sièges avant 3 du véhicule décapotable. Fig. 2 est une vue de dessus du corps 4 du dispositif anti-remous. Ce corps 4 est élargi dans sa partie centrale du côté opposé à la fente de sortie de l'enrouleur 7. Cette partie élargie 16 définit une platine en porte à faux dans laquelle deux trous 17 sont percés avec un diamètre légèrement plus large que le diamètre des tiges 5 des appuie-têtes 6.

Pour monter le dispositif anti-remous, on enlève les appuie-têtes 6 avec leurs tiges 5 du dossier du siège avant 3, on met en place le corps du dispositif 4 et on remet les appuie-têtes 6 à leur place en introduisant les tiges 5 dans les trous 17 fixant simultanément ainsi le corps 4 du dispositif anti-remous sur le dossier.

Etant donné que les diamètres des tiges 5 des appuie-têtes 6 ainsi que la distance entre elles sont standardisées, le dispositif anti-remous selon l'invention peut être monté sur n'importe quel véhicule décapotable.

Fig. 3 montre une variante de la fixation du corps du dispositif anti-remous sur le dossier d'un siège avant 3. Selon cette variante, le corps 4 du dispositif est fixé au moyen de clips élastiques 19 sur les deux tiges 5 d'un appuie-tête 6. Cette fixation se fait par un mouvement d'arrière en avant dans le sens longitudinal du véhicule. Ainsi, les dispositifs anti-remous peuvent être montés sans avoir besoin d'ôter les appuie-têtes des dossiers des sièges avant 3.

Selon encore une autre variante, la fixation du corps 4 du dispositif se fait par une fixation positive élastique à ressort 20, comme montré Fig. 4. Ici, deux éléments qui s'appuient sur une épaule 21 avec des ressorts à pression poussent avec leur surface frontale 22 de logement contre les tiges 5 des appuie-têtes 6. Ainsi, le corps 4 du dispositif est bien fixé sur le dossier du siège avant 3 sans qu'il soit nécessaire pour son montage d'enlever les appuie-têtes 6.

Comme on voit bien sur Fig. 1, le dispositif anti-remous selon l'invention peut rester à sa place avec des filets 1, 8 enroulés et les bras 9 pliés vers leur position horizontale de rangement, sans gêner l'utilisation des sièges arrière quand un passager veut s'asseoir sur un des sièges arrière.

Le dispositif selon l'invention n'encombre donc pas dans sa position de rangement le coffre du véhicule. Il est, comme décrit ci-dessus, facile à mettre en place et à disposer et il présente une solution simple et économique.

## Revendications

1. Dispositif anti-remous accessoire pour véhicule automobile décapotable avec au moins un filet vertical (1) extensible d'un premier enrouleur (2) disposé à l'arrière des sièges avant (3), **caractérisé en ce que** ce dispositif comprend deux sous-ensembles (a, b), chacun composé d'un corps (4) comportant des moyens de fixation (15) de ce corps (4) sur des tiges (5) de l'appuie-tête (6), un deuxième enrouleur (7) à axe horizontal pour un filet (8) extensible horizontalement et un bras articulé (9) pouvant pivoter entre une position horizontale et une position verticale portant soit un enrouleur (2) d'un filet vertical (1) soit un moyen d'accrochage (10) de l'extrémité frontale du filet vertical (1).

2. Dispositif anti-remous accessoire selon la revendication 1, **caractérisé en ce que** le corps (4) du dispositif anti-remous présente une longueur qui correspond essentiellement à la largeur du dossier du siège avant (3).

3. Dispositif anti-remous accessoire selon la revendication 1 ou 2, **caractérisé en ce que** le deuxième enrouleur (7) à axe horizontal et le filet (8) extensible horizontalement présentent une largeur qui correspond essentiellement à la largeur du corps (4) du dispositif anti-remous.

4. Dispositif anti-remous accessoire selon l'une des revendications précédentes, **caractérisé en ce que** l'extrémité frontale du filet horizontal (8) est renforcée par une tige (11) comprenant en son milieu un moyen d'accrochage (12) pour fixer le filet (8) sur une paroi intérieure située à l'arrière de l'espace défini derrière les sièges avant (3) du véhicule.

5. Dispositif anti-remous accessoire selon la revendication 4, **caractérisé en ce que** le moyen d'accrochage (12) est un crochet, un aimant, un accrochage positif, velcro ®, etc.

6. Dispositif anti-remous accessoire selon l'une quelconque des revendications précédentes, **caractérisé en ce que** l'axe de pivot du bras (9) est orienté parallèlement à l'axe longitudinal du véhicule et le bras (9) peut être enclenché dans sa position verticale.

7. Dispositif anti-remous accessoire selon l'une des revendications précédentes, **caractérisé en ce que** le filet vertical (1) présente une élasticité suffisante pour absorber les différences de longueur requises pour des positions de sièges différentes.

8. Dispositif anti-remous accessoire selon l'une des revendications précédentes, **caractérisé en ce que** l'extrémité frontale du filet vertical (1) est renforcée par une tige (14) qui porte en son milieu un moyen d'accrochage (13) pour sa fixation sur le moyen d'accrochage (10) correspondant situé sur le bras (9) correspondant.

9. Dispositif anti-remous accessoire selon l'une quelconque des revendications précédentes, **caractérisé en ce que** les moyens de fixation du corps (4) du dispositif sur le dossier du siège avant (3) sont constitués par une platine (16) en porte à faux dans la partie centrale du corps (4) dans laquelle deux trous (17) sont percés ayant un diamètre et une distance entre eux correspondant à la distance qui sépare les deux tiges (5) d'appuie-tête (6) du siège avant (3).

10. Dispositif anti-remous accessoire selon l'une des revendications 1 à 8, **caractérisé en ce que** les moyens de fixation du corps (4) du dispositif sur le dossier du siège avant (3) sont constitués par des clips élastiques (19) s'accrochant sur les tiges (5) des appuie-têtes (6).

11. Dispositif anti-remous accessoire selon l'une des revendications 1 à 8, **caractérisé en ce que** le corps (4) du dispositif comprend un dispositif à ressort (20) pour assurer sa fixation positive sur l'intérieur des tiges (5) des appuie-têtes (6).
